# EUROPEAN PATENT SPECIFICATION

(11) **EP 3 187 245 B1**
(45) Date of publication and mention of the grant of the patent: **18.09.2019**
(21) Application number: 16814044.0
(22) Date of filing: 27.04.2016
(51) Int. Cl.: B01D 53/50, B01D 53/18, B01D 53/78, B01D 53/92, F01N 3/04

(54) **EXHAUST GAS TREATMENT APPARATUS**
ABGASBEHANDLUNGSVORRICHTUNG
APPAREIL DE TRAITEMENT DE GAZ D'ÉCHAPPEMENT

(30) Priority: 26.06.2015 JP 2015128866
(43) Date of publication of application: 05.07.2017
(73) Proprietor: Fuji Electric Co., Ltd., Kawasaki-shi, Kanagawa 210-9530 (JP)
(72) Inventor: KOMATSU, Tadashi, Kawasaki-shi Kanagawa 210-9530 (JP); TAKAHASHI, Kuniyuki, Kawasaki-shi Kanagawa 210-9530 (JP)
(74) Representative: MERH-IP Matias Erny Reichl Hoffmann Patentanwälte PartG mbB
(86) International application number: PCT/JP2016/063301
(87) International publication number: WO 2016/208273

(56) References cited:
- JP-A- H0 949 627
- JP-A- H0 949 627
- JP-A- S4 733 360
- JP-A- S5 949 823
- JP-A- S5 949 823
- JP-A- H07 171 337
- JP-A- H08 281 056
- JP-A- H08 281 056
- JP-A- H09 173 764
- JP-A- H09 173 764
- JP-A- 2013 086 054
- JP-A- 2013 086 054
- JP-A- 2014 117 685
- JP-A- 2014 117 685
- JP-A- 2015 510 446
- JP-A- 2015 510 446
- JP-U- S61 827
- JP-U- S5 634 528
- JP-U- S5 634 528

## Description

### BACKGROUND

### 1. TECHNICAL FIELD

The present invention relates to an exhaust gas processing apparatus.

### 2. RELATED ART

A conventional exhaust gas processing apparatus is known that removes harmful components in exhaust gas by passing the exhaust gas from a bottom portion to a top portion of a cylindrical absorption tower into which an absorption liquid such as sea water is sprayed, as shown in the Patent Documents. Inside the absorption tower, the distance over which the exhaust gas contacts the absorption liquid such as sea water is lengthened by moving the exhaust gas to the top portion while circulating the exhaust gas in a spiral.
Patent Document 1: Japanese Patent Application Publication No. H06-190240
Patent Document 2: Japanese Patent Application Publication No. H08-281055

Sulfurous acid gas (SO₂), which is one harmful component in exhaust gas, is gradually removed from the gas through a first-order reaction with the absorption liquid from the bottom portion to the top portion of the absorption tower. Therefore, the concentration of harmful components is lower in the top portion than in the bottom portion. Here, in a case where the absorption liquid is ejected with a constant volume flow rate by nozzles having the same opening diameter at the bottom portion and the top portion of the absorption tower, an excessive amount of the absorption liquid is ejected in the top portion of the absorption tower without contributing to the absorption of the sulfurous acid gas. The electrical power necessary for moving the pump that supplies the absorption liquid increases according to the volume flow rate of the absorption liquid being ejected.

### SUMMARY

According to a first aspect of the present invention, provided is an exhaust gas processing apparatus that processes exhaust gas. The exhaust gas processing apparatus may comprise a reaction tower, a trunk tube, and a plurality of ejecting sections. The reaction tower may have exhaust gas introduced thereto. The trunk tube may be provided in a height direction inside the reaction tower. The trunk tube may be supplied with a liquid for processing the exhaust gas. The plurality of ejecting sections may eject the liquid supplied from the trunk tube. A height direction of the reaction tower may be from a bottom portion side where the exhaust gas is introduced to a top portion side where the exhaust gas is emitted. The plurality of ejecting sections may be provided at different positions in the. A volume flow rate of the liquid ejected from the ejecting sections on the top portion side may be less than a volume flow rate of the liquid ejected from the ejecting sections on the bottom portion side.

A volume flow rate of the liquid ejected by the plurality of ejecting sections may become smaller in order from the bottom portion side to the top portion side.

Area of openings ejecting the liquid in the ejecting sections on the top portion side may be less than area of openings ejecting the liquid in the ejecting sections on the bottom portion side.

Area of openings ejecting the liquid in the plurality of ejecting sections may become smaller in order from the bottom portion side to the top portion side.

Particle diameter of the liquid ejected by the ejecting sections on the top portion side may be less than particle diameter of the liquid ejected by the ejecting sections on the bottom portion side.

Cross-sectional area of the trunk tube on the top portion side is less than cross-sectional area of the trunk tube on the bottom portion side.

The plurality of ejecting sections may be divided into a plurality of groups according to the height direction. The groups may include at least a bottom portion group on the bottom portion side of the reaction tower; a top portion group on the top portion side of the reaction tower; and a middle portion group between the bottom portion group and the top portion group. A volume flow rate of the liquid ejected by the plurality of ejecting sections may become smaller in order from the bottom portion group to the top portion group.

Area of the openings ejecting the liquid in the plurality of ejecting sections may become smaller in order from the bottom portion group to the top portion group.

A difference between the area of the openings of the ejecting sections in the bottom portion group and the area of the openings of the ejecting sections in the middle portion group may be greater than a difference between the area of the openings of the ejecting sections in the middle portion group and the area of the openings of the ejecting sections in the top portion group.

The exhaust gas processing apparatus may further comprise a control section that controls a volume flow rate of the liquid supplied to the trunk tube.

The control section may control the volume flow rate of the liquid ejected from the ejecting sections in each of the groups.

The exhaust gas processing apparatus may process the exhaust gas emitted by a power apparatus. The control section may select the group to operate according to a load of the power apparatus.

The control section may cause the ejecting sections of the top portion group to operate constantly when processing the exhaust gas.

A center axis direction of the ejecting sections of the top portion group may be inclined to the bottom portion side.

The summary clause does not necessarily describe all necessary features of the embodiments of the present invention. The present invention may also be a subcombination of the features described above.

### BRIEF DESCRIPTION OF THE DRAWINGS

Fig. 1 shows an exhaust gas processing apparatus 100 according to a first embodiment.
Fig. 2 shows a cross section of the exhaust gas processing apparatus 100 in a horizontal direction.
Fig. 3 is a drawing in which (A) shows the opening planes 44 of the nozzles 42 in the top portion group 46-3, (B) shows the opening planes 44 of the nozzles 42 in the middle portion group 46-2, and (C) shows the opening planes 44 of the nozzles 42 in the bottom portion group 46-1.
Fig. 4 is a schematic view of a comparison between the particle sizes of the cleaning liquid in the bottom portion side 14 and in the top portion side 12.
Fig. 5 shows a relationship between the concentration of the sulfurous acid gas and the volume flow rate of the sea water in the height direction of the reaction tower 10.
Fig. 6 shows a comparative example of the relationship between the concentration of the sulfurous acid gas and the volume flow rate of the sea water in the height direction of the reaction tower 10.
Fig. 7 shows an exhaust gas processing apparatus 110 according to a second embodiment.
Fig. 8 shows nozzles 42 of the top portion group 46-3 according to a third embodiment.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

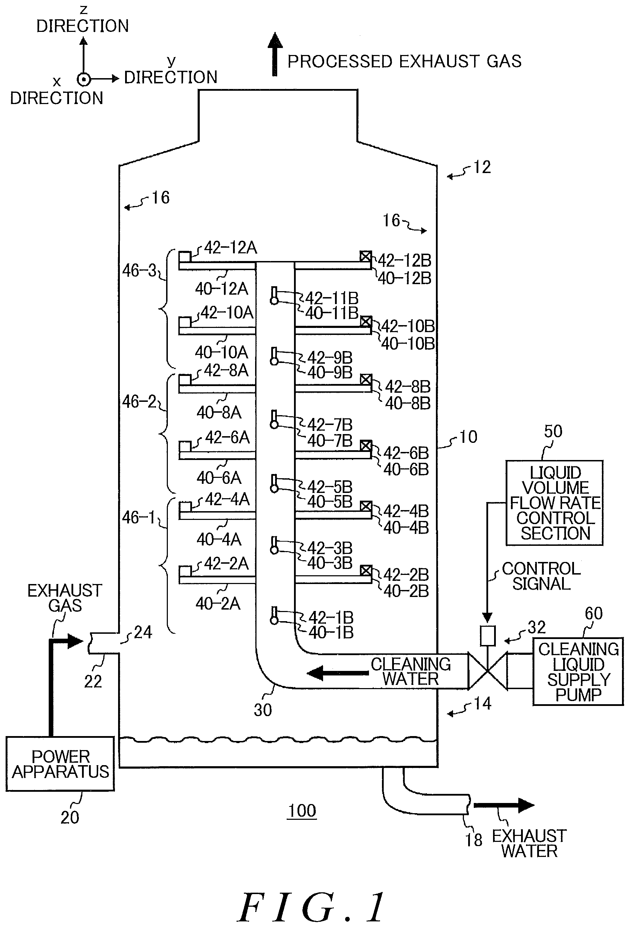

Fig. 1 shows an exhaust gas processing apparatus 100 according to a first embodiment. The exhaust gas processing apparatus 100 processes exhaust gas that is emitted from a power apparatus 20, which is the engine of a ship or the like. Specifically, the exhaust gas processing apparatus 100 removes harmful substances such as sulfurous acid gas (SO₂) contained in the exhaust gas. The exhaust gas processing apparatus 100 in the present example includes a reaction tower 10, an exhaust gas introduction pipe 22, a trunk tube 30, a liquid volume flow rate control section 50, and a cleaning liquid supply pump 60.

The exhaust gas introduction pipe 22 introduces the exhaust gas emitted by the power apparatus 20 into the reaction tower 10. The reaction tower 10 includes an opening 24 on a side surface. The exhaust gas introduction pipe 22 is connected to the bottom portion side 14 of the reaction tower 10 via the opening 24. The exhaust gas introduction pipe 22 is connected to the reaction tower 10 such that the introduced exhaust gas is circulated in a spiral within the reaction tower 10.

In the present example, the exhaust gas is introduced from the power apparatus 20 to the reaction tower 10 at 7000 (m³/h) (volume flow rate calculated at 0°C and 1 atm). In this Specification, the volume flow rates of the liquid and the exhaust gas are both in units of (m³/h). Specifically, if the units are not explicitly stated, the volume flow rates are assumed to be in units of (m³/h).

In a case where a cyclone scrubber is installed in the engine or boiler of a ship, the reaction tower 10 can be installed in the engine room or in the deck. For example, the height of the reaction tower 10 is less than or equal to 7 m. Preferably, the height of the reaction tower 10 is less than or equal to 5 m. The radius of the reaction tower 10 may be approximately from 0.3 m to several meters. The diameter of the reaction tower 10 in the present example is 0.8 m.

The reaction tower 10 has an internal space that extends in the height direction of the reaction tower 10 from the bottom portion side 14 where the exhaust gas is introduced to the top portion side 12 where the exhaust gas is emitted. The height direction is a direction perpendicular to the ground surface or the water surface, for example. In this Specification, the height direction is the z direction. Furthermore, the horizontal plane that is perpendicular to the z direction is defined by the x-y plane formed by the x direction and the y direction that are perpendicular to each other.

One tube 30 is provided in the internal space of the reaction tower 10. The structures such as the reaction tower 10 and the trunk tube 30 that contact the liquid (cleaning liquid) are desired to have durability with respect to sea water or alkali liquid. For example, when considering low cost materials, the material of the structures contacting the liquid is an iron material such as SS400. The material of the structures contacting the liquid may be a copper alloy such as naval brass, an aluminum alloy such as aluminum brass, a nickel alloy such as cupronickel, or stainless steel such as SUS316L. The term SUS is an abbreviation for stainless steel according to Japanese Industrial Standards. The term SUS316L refers to stainless steel with a lower carbon content rate than SUS316.

The trunk tube 30 is provided extending in the z direction inside the reaction tower 10. The cleaning liquid for processing the exhaust gas is supplied from the cleaning liquid supply pump 60 into the trunk tube 30. The trunk tube 30 provides a space through which the cleaning liquid is transported in the z direction. The cleaning liquid is sea water, for example. The liquid may be alkali liquid such as a caustic soda solution.

The trunk tube 30 includes a plurality of branch tubes 40 on an outer side surface thereof. The plurality of branch tubes 40 are provided extending from the outer side surface of the trunk tube 30 toward the inner side surface 16 of the reaction tower 10. The branch tubes 40 are provided extending in the x-y plane, for example. Each branch tube 40 may extend to a region near the inner side surface 16 of the reaction tower 10. The interval between the tip of each branch tube 40 and the inner side surface 16 of the reaction tower 10 may be approximately from 1 cm to tens of centimeters.

The trunk tube 30 includes a pair of branch tubes 40 at each of a plurality of different positions in the height direction. The pairs of branch tubes 40 are provided at predetermined positions in the z direction. For example, branch tubes 40-2A and 40-2B are a pair of branch tubes 40 at the same position in the z direction. A pair of branch tubes 40-3A and 40-3B are provided at positions higher in the z direction than the branch tubes 40-2A and 40-2B. For the sake of convenience in the drawing, the branch tube 40-3A is not shown.

In the present example, a plurality of pairs of branch tubes, each including a branch tube 40-nA and a branch tube 40-nB, are arranged at different positions in the height direction and around the trunk tube 30 serving as an axis at angle intervals of 90 degrees. Here, n is an arbitrary natural number greater than or equal to 2. In another example, the plurality of pairs of branch tubes 40 may be arranged respectively at different positions in the height direction and around the trunk tube 30 serving as an axis at angle intervals less than 90 degrees. The angle that is less than 90 degrees may be an arbitrary angle in a range from 60 degrees to 20 degrees. By using an angle less than 90 degrees, it is possible to eject the absorption liquid with higher density inside the reaction tower 10. Furthermore, the plurality of pairs of branch tubes 40 may be arranged respectively at different positions in the height direction and around the trunk tube 30 serving as an axis at angle intervals greater than 90 degrees. The angle greater than 90 degrees may be an arbitrary angle in a range from 90 degrees to 120 degrees.

Each branch tube 40 has a nozzle 42 serving as an ejecting section that ejects the liquid supplied from the trunk tube 30. For example, the branch tube 40-8A includes one nozzle 42-8A and the branch tube 40-8B includes one nozzle 42-8B. The nozzles 42 are provided on the side of the inner side surface 16, which is the end of each branch tube 40 in the extension direction. The plurality of nozzles 42 are provided at different positions in the height direction. For example, nozzles 42-1A to 42-12A are provided at different positions in the height direction, in response to branch tubes 40-1A to 40-12A being provided at different positions in the height direction.

Each nozzle 42 ejects the cleaning liquid from an opening plane. The nozzles 42 in the present example are spray nozzles. Each nozzle 42 may eject the cleaning liquid in a hollow cone shape. The opening plane of each nozzle 42 is schematically shown by an × mark. In each pair of branch tubes 40, the nozzles 42 are provided facing in opposite directions.

The plurality of branch tubes 40 and the plurality of nozzles 42 are divided into a plurality of groups 46, according to the height direction. In the present example, the plurality of groups 46 include a bottom portion group 46-1 on the bottom portion side 14, a top portion group 46-3 on the top portion side 12, and a middle portion group 46-2 between the bottom portion group 46-1 and the top portion group 46-3. The trunk tube 30 in the present example has a length of 3 m in the z direction, and the bottom portion group 46-1, the middle portion group 46-2, and the top portion group 46-3 each have a length of 1 m in the z direction.

In the present example, the bottom portion group 46-1 includes nozzles 42-1A and 42-1B to nozzles 42-4A and 42-4B. The middle portion group 46-2 includes nozzles 42-5A and 42-5B to nozzles 42-8A and 42-8B. The top portion group 46-3 includes nozzles 42-9A and 42-9B to nozzles 42-12A and 42-12B. In the present example, four pairs of branch tubes 40 are provided for each group 46, but in another example, the number of branch tube 40 pairs in each group 46 may be less than or greater than four.

In the manner described above, the reaction between the sulfurous acid gas (SO₂) and the water including the alkali component is a first-order reaction. For example, the reaction between the sulfurous acid gas and sodium hydroxide can be represented by Formula 1 shown below. The water that includes the alkali component may be water to which at least one of sodium hydroxide (NaOH) and sodium hydrogencarbonate (Na₂CO₃) has been added.

Formula 1: SO₂+Ne⁺+OH⁻ → Na+HSO₃⁻

As shown in Formula 1, the sulfurous acid gas becomes sulfurous acid ions (HSO₃⁻). The sulfurous acid ions become included in the cleaning liquid and fall to the bottom portion side 14 of the reaction tower 10. The sulfurous acid ions then pass through the drainage pipe 18 as exhaust water and are emitted to the outside from the reaction tower 10. After the exhaust water has been pH-adjusted, this water may be released to the outside of the exhaust gas processing apparatus 100 or may be reused as the cleaning liquid without being released to the outside.

As shown in Formula 1, since the reaction between the sulfurous acid gas and the cleaning liquid is a first-order reaction that is proportional to the concentration of the sulfurous acid gas, the concentration of the sulfurous acid gas becomes lower from the bottom portion side 14 to the top portion side 12 of the reaction tower 10.

In the present example, the volume flow rate of the cleaning liquid ejected from the nozzles 42 on the top portion side 12 is less than the volume flow rate of the liquid ejected from the nozzles 42 on the bottom portion side 14. In other words, the volume flow rate of the cleaning liquid ejected by the nozzles 42 becomes lower in the order of the bottom portion group 46-1, the middle portion group 46-2, and the top portion group 46-3.

Specifically, the volume flow rate of the cleaning liquid for the nozzles 42 of the bottom portion group 46-1 is 72 (m³/h). Furthermore, the volume flow rate of the cleaning liquid for the nozzles 42 of the middle portion group 46-2 is 16 (m³/h). Yet further, the volume flow rate of the cleaning liquid for the nozzles 42 of the top portion group 46-3 is 8 (m³/h). In this way, the volume flow rates of the liquid in the bottom portion group 46-1, the middle portion group 46-2, and the top portion group 46-3 may have a ratio of approximately 9:2:1. This can be realized by making the openings of the nozzles 42, which are the ejection openings for the cleaning liquid, smaller in the order of the bottom portion group 46-1, the middle portion group 46-2, and the top portion group 46-3. The areas of the openings of the nozzles 42 may be the same, and the number of nozzles 42 may be lower in the order of the bottom portion group 46-1, the middle portion group 46-2, and the top portion group 46-3. In other words, it is only necessary to be able to make the volume flow rates of the ejected liquid smaller in order from the bottom portion side 14 to the top portion side 12. Furthermore, the area of the openings of the nozzle 42 may be made smaller or the number of nozzles 42 may be reduced along with making the area of the openings of the nozzles 42 smaller, in the order of the bottom portion group 46-1, the middle portion group 46-2, and the top portion group 46-3.

The exhaust gas processing apparatus 100 in the present example can prevent ejection of excess cleaning liquid that does not contribute to the absorption of the sulfurous acid gas, compared to a case where the absorption liquid is ejected with the same volume flow rate from the bottom portion side 14 to the top portion side 12 of the' absorption tower. Accordingly, it is possible to restrict the power needed to operate the cleaning liquid supply pump 60 by an amount corresponding to the amount of excess cleaning liquid that is no longer ejected. In addition, the exhaust gas processing apparatus 100 in the present example has a higher volume flow rate for the cleaning liquid in the bottom portion side 14 of the reaction tower 10 than in the top portion side 12, and therefore it is possible to eliminate the lack of cleaning liquid for the sulfurous acid gas in the bottom portion side 14.

A valve 32 is provided between the trunk tube 30 and the cleaning liquid supply pump 60. The liquid volume flow rate control section 50 controls the volume flow rate of the cleaning liquid supplied to the trunk tube 30 by controlling the opening and closing of the valve 32. The valve 32 in the present example is an electric-powered motor valve, but may instead be an electromagnetic valve. In another example, the liquid volume flow rate control section 50 does not need to be provided. In this case, the valve 32 may be a ball valve or a gate valve capable of being manually opened and closed.

The liquid volume flow rate control section 50 can control the volume flow rate of the cleaning liquid ejected from the nozzles 42 for each group 46 divided according to the bottom portion group 46-1, the middle portion group 46-2, and the top portion group 46-3, by opening and closing the valve 32.

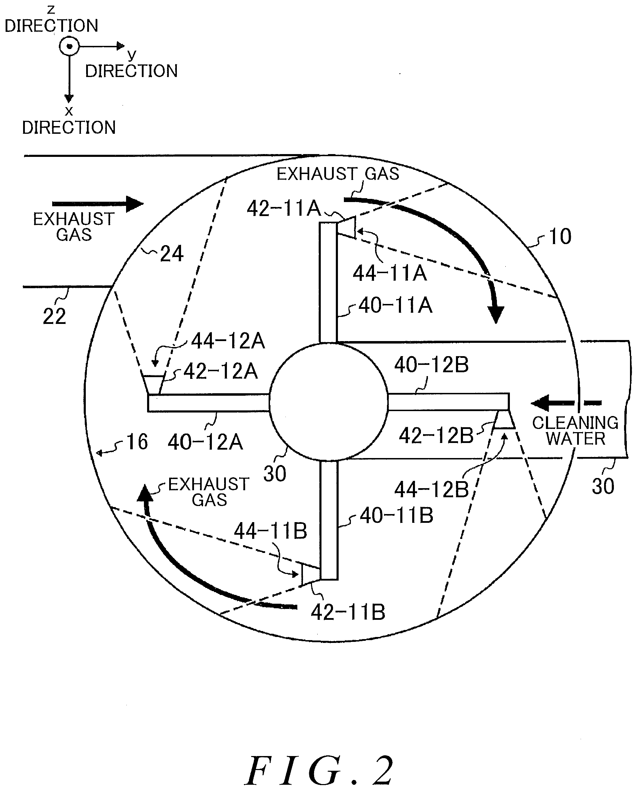

Fig. 2 shows a cross section of the exhaust gas processing apparatus 100 in a horizontal direction. Fig. 2 shows only the branch tubes 40 and the nozzles 42 in the topmost portion. The opening plane 44-12A of the nozzle 42-12A is provided oriented in the -x direction, the opening plane 44-11A of the nozzle 42-11A is provided oriented in the y direction, the opening plane 44-12B of the nozzle 42-12B is provided oriented in the x direction, and the opening plane 44-11B of the nozzle 42-11B is provided oriented in the -y direction. Each nozzle 42 in the present example ejects the cleaning liquid in a hollow cone shape from the opening plane 44.

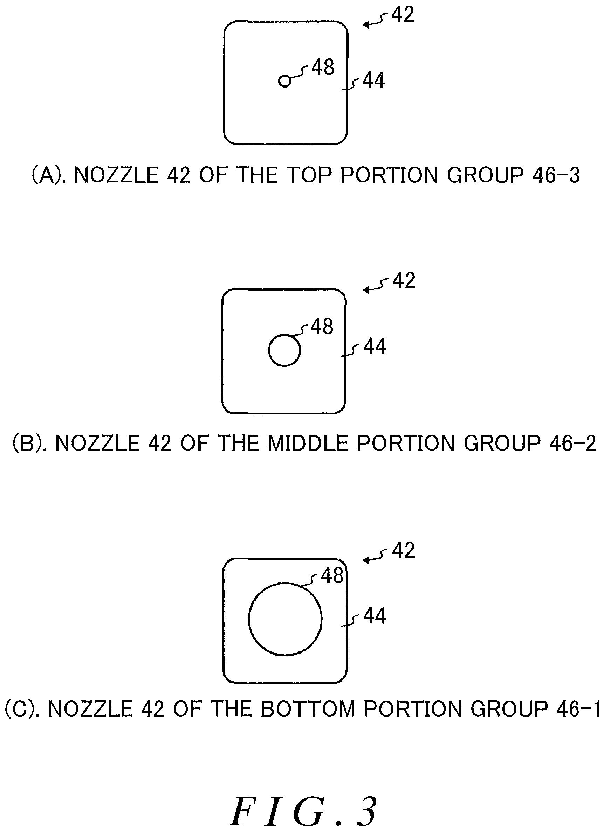

In Fig. 3, (A) shows the opening planes 44 of the nozzles 42 in the top portion group 46-3, (B) shows the opening planes 44 of the nozzles 42 in the middle portion group 46-2, and (C) shows the opening planes 44 of the nozzles 42 in the bottom portion group 46-1.

The nozzles 42 eject the cleaning liquid from the openings 48 provided in the opening planes 44. The area of the openings 48 in the nozzles 42 on the top portion side 12 is less than the area of the openings 48 in the nozzles 42 on the bottom portion side 14.

The openings 48 of the nozzles 42 in the present example become smaller in the order of the bottom portion group 46-1, the middle portion group 46-2, and the top portion group 46-3. Specifically, with the area of each opening 48 in the bottom portion group 46-1 being 1, the area of each opening 48 in the middle portion group 46-2 is 1/2 and the area of each opening 48 in the top portion group 46-3 is 1/6. When the area of an opening 48 is smaller, the particle diameter of the cleaning liquid is smaller. Furthermore, in the present example, the difference between the area of each opening 48 of a nozzle 42 in the bottom portion group 46-1 and the area of each opening 48 of a nozzle 42 in the middle portion group 46-2 is greater than the difference between the area of each opening 48 of a nozzle 42 in the middle portion group 46-2 and the area of each opening 48 of a nozzle 42 in the top portion group 46-3.

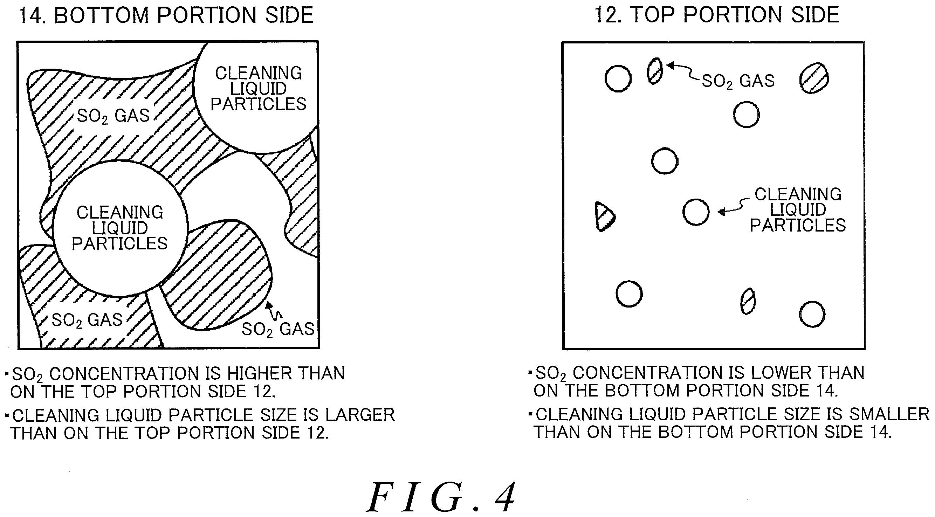

Fig. 4 is a schematic view of a comparison between the particle sizes of the cleaning liquid in the bottom portion side 14 and in the top portion side 12. Fig. 4 is a drawing that is convenient for describing differences in particle diameter, and does not define a specific scale. However, the same scale is shown for both the bottom portion side 14 and the top portion side 12. The particles of the cleaning liquid are shown by circles, and diagonal lines are provided to indicate the sulfurous acid gas.

The sulfurous acid gas in the exhaust gas is gradually removed as the exhaust gas moves from the bottom portion side 14 to the top portion side 12. Therefore, the concentration of the sulfurous acid gas is lower on the top portion side 12 side than on the bottom portion side 14 side. In the present example, the particle diameter of the cleaning liquid ejected by the nozzles 42 on the top portion side 12 is smaller than the particle diameter of the cleaning liquid ejected by the nozzles 42 on the bottom portion side 14. When the particle diameter of the ejected cleaning liquid is smaller, the contact surface area with the sulfurous acid gas per mass of the cleaning liquid is larger. Therefore, even when the volume flow rate of the cleaning liquid is lower, by making the particle diameter of the cleaning liquid smaller farther on the top portion side 12 it is possible to effectively remove the sulfurous acid gas on the top portion side 12 where the concentration has become lower.

In contrast to this, the particle diameter of the cleaning liquid ejected by the nozzles 42 on the bottom portion side 14 is larger than the particle diameter of the cleaning liquid ejected by the nozzles 42 on the top portion side 12. When the particle diameter of the ejected cleaning liquid is larger, more alkali components are contained in each particle of the cleaning liquid, and therefore it is possible for the reaction of Formula 1 to progress further, such that the amount of sulfurous acid gas that is absorbed becomes greater. Therefore, by making the particle diameter of the cleaning liquid larger farther on the bottom portion side 14, it is possible to effectively remove the sulfurous acid gas in the bottom portion side 14 where the concentration is higher.

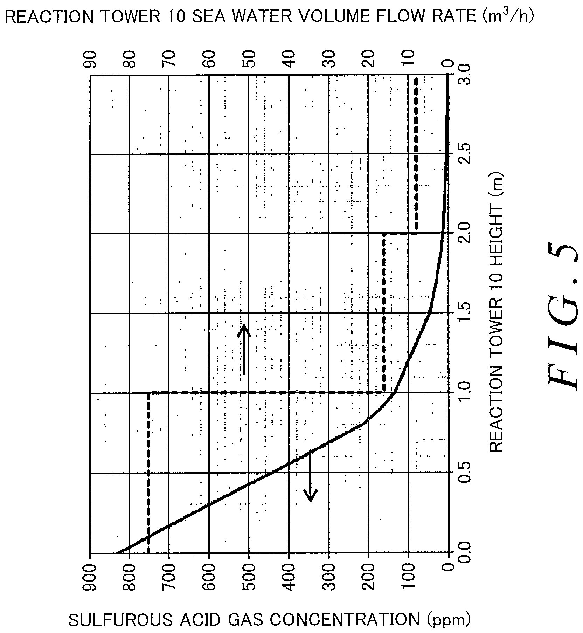

Fig. 5 shows a relationship between the concentration of the sulfurous acid gas and the volume flow rate of the sea water in the height direction of the reaction tower 10. In the present example, sea water is used as the cleaning liquid. The vertical axis on the left side indicates the sulfurous acid gas concentration (ppm) and the vertical axis on the right side indicates the sea water volume flow rate (m³/h) of the reaction tower 10. The horizontal axis indicates the height (m) of the reaction tower 10. In Fig. 5, the solid line indicates the sulfurous acid gas concentration (ppm) and the dotted line indicates the sea water volume flow rate (m³/h) of the reaction tower 10. The height position at 0 (zero) of the reaction tower 10 is the position in the height direction of the branch tube 40-1, which is positioned farthest on the bottom portion side 14.

In the present example, the bottom portion group 46-1 is provided at height positions of 0.0 (m) to 1.0 (m) of the reaction tower 10. The middle portion group 46-2 is provided at height positions of 1.0 (m) to 2.0 (m) of the reaction tower 10. The top portion group 46-3 is provided at height positions of 2.0 (m) to 3.0 (m) of the reaction tower 10. In the manner described above, the volume flow rate of the cleaning liquid ejected by the nozzles 42 is 75 (m³/h) in the bottom portion group 46-1, 16 (m³/h) in the middle portion group 46-2, and 8 (m³/h) in the top portion group 46-3.

In the present example, the concentration of the sulfurous acid gas is 830 (ppm) at the height position of 0.0 (m) of the reaction tower 10. The concentrations of the sulfurous acid gas are 130 (ppm), 12 (ppm), and 1.5 (ppm) respectively at the height position of 1.0 (m), 2.0 (m), and 3.0 (m) of the reaction tower 10. In this way, by making the particle diameter of the cleaning liquid smaller and making the volume flow rate of the cleaning liquid smaller farther on the top portion side 12, it is possible to effectively remove the sulfurous acid gas on the bottom portion side 14 and on the top portion side 12.

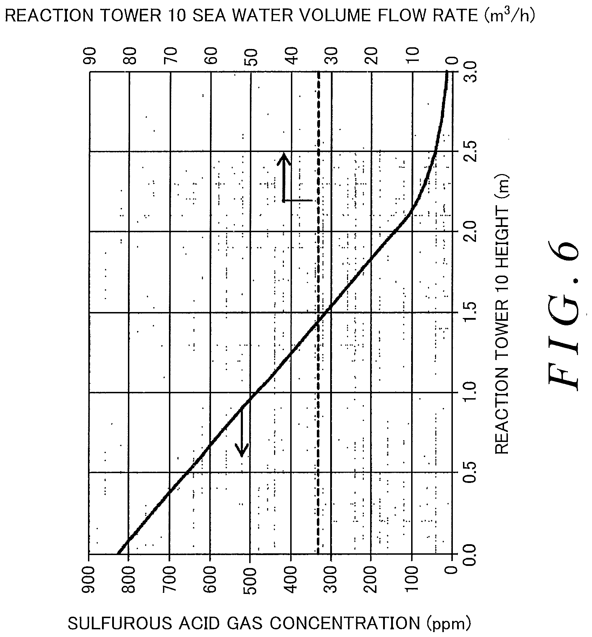

Fig. 6 shows a comparative example of the relationship between the concentration of the sulfurous acid gas and the volume flow rate of the sea water in the height direction of the reaction tower 10. The vertical axis and the horizontal axis are the same as in Fig. 5. In this comparative example, the volume flow rate of the cleaning liquid is not changed in the height direction. Specifically, the volume flow rate of the sea water serving as the cleaning liquid is constant at 33.33 (m³/h) in the height direction. Furthermore, the areas of the openings 48 of all of the nozzles 42 are made the same, thereby resulting in a constant particle diameter for the cleaning liquid.

In this comparative example, the sulfurous acid gas concentration at the height positions of 0.0 (m) to 2.0 (m) of the reaction tower 10 is higher than in the example shown in Fig. 5, and therefore it can be said that an insufficient amount of alkali components are supplied for the sulfurous acid gas. The sulfurous acid gas concentration at the height position of 3.0 (m) of the reaction tower 10 is 14 (ppm). In this way, when the particle diameter of the cleaning liquid and the volume flow rate of the cleaning liquid are constant, the removal rate of the sulfurous acid gas in the bottom portion side 14 and in the top portion side 12 is lower than in the example of Fig. 5. In other words, the example of Fig. 5 can be said to have less excessive cleaning solution that does not contribute to the absorption of the sulfurous acid gas in the top portion side 12 and the reaction tower 10, and to eliminate the lack of cleaning liquid in the bottom portion side 14 of the reaction tower 10.

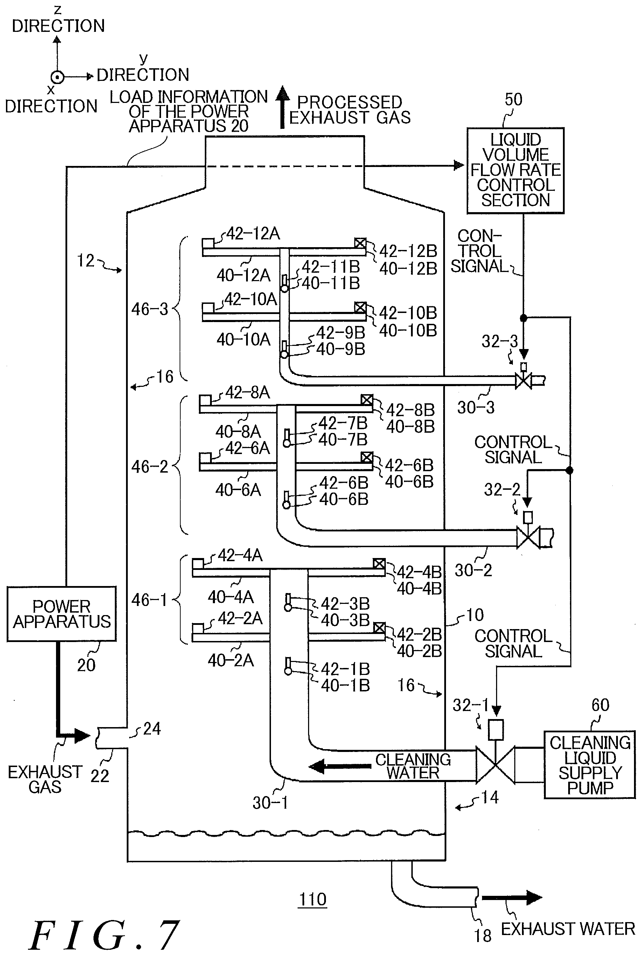

Fig. 7 shows an exhaust gas processing apparatus 110 according to a second embodiment. In the present example, instead of the trunk tube 30 of the first embodiment, the exhaust gas processing apparatus 110 is provided with a trunk tube 30-1 on the bottom portion side 14, a trunk tube 30-2 in the middle portion, and a trunk tube 30-3 on the top portion side 12. Furthermore, the trunk tube 30-1 on the bottom portion side 14, the trunk tube 30-2 in the middle portion, and the trunk tube 30-3 on the top portion side 12 are respectively provided with valves 32-1, 32-2, and 32-3.

In the present example, the cross-sectional area of the trunk tube 30-3 on the top portion side 12 is less than the cross-sectional area of the trunk tube 30-1 on the bottom portion side 14. Furthermore, the cross sectional area of the trunk tube 30-3 on the top portion side 12 is less than the cross-sectional area of the trunk tube 30-2 in the middle portion, and the cross-sectional area of the trunk tube 30-2 in the middle portion is less than the cross-sectional area of the trunk tube 30-1 on the bottom portion side 14. In the present example, the cross-sectional area of the trunk tube 30 refers to the cross-sectional are in the radial direction (x-y plane) of the trunk tube 30 that extends in a direction from the bottom portion side 14 to the top portion side 12 (z direction). In the present example, the volume flow rate of the liquid ejected by the nozzles 42 serving as the ejecting sections can be made smaller in order from the bottom portion group 46-1 to the top portion group 46-3. Furthermore, the area of the openings 48 of the nozzles 42 may be made smaller in order from the bottom portion group 46-1 to the top portion group 46-3.

The liquid volume flow rate control section 50 in the present example can control the volume flow rate of the cleaning liquid ejected from the nozzles 42 in each group 46. The liquid volume flow rate control section 50 in the present example receives load information from the power apparatus 20, selects a group 46 according to the load of the drive apparatus 20, and causes the nozzles 42 in each group 46 to operate. Specifically, the liquid volume flow rate control section 50 in the present example may independently control each valve 32 according to the magnitude of the exhaust gas volume flow rate. The present example differs from the first embodiment by including the plurality of valves 32 and independently controlling the plurality of valves 32. Other points in the second embodiment may be the same as in the first embodiment.

The liquid volume flow rate control section 50 in the present example may, according to the magnitude of the exhaust gas, (a) cause the nozzles 42 of the bottom portion group 46-1, the middle portion group 46-2, and the top portion group 46-3 to operate together, (b) cause the nozzles 42 of the bottom portion group 46-1 and the top portion group 46-3 to operate together, or (c) cause the nozzles 42 of the middle portion group 46-2 and the top portion group 46-3 to operate together.

The cleaning liquid ejected from the top portion group 46-3 may compensate for the processing of sulfurous acid gas that could not be processed by at least one of the bottom portion group 46-1 and the middle portion group 46-2. In order to realize this, the liquid volume flow rate control section 50 may cause the nozzles 42 of the top portion group 46-3 to always operate when processing the exhaust gas.

The liquid volume flow rate control section 50 may control the opening and closing of the valves 32 such that the volume flow rate of each tube 30 is controlled to be in a range including 0%, 50%, and 100%. Here, a volume flow rate of 0% refers to a volume flow rate in a state where the valve 32 is completely closed, and a volume flow rate of 100% refers to a volume flow rate in a state where the valve 32 is completely opened. In the first embodiment, the rated volume flow rates of the trunk tubes 30 in bottom portion group 46-1, the middle portion group 46-2, and the top portion group 46-3 may have a ratio of 9:2:1. Furthermore, the volume flow rate of each tube 30 may be controlled to be in an arbitrary numerical range.

The liquid volume flow rate control section 50 can control the ratio of the volume flow rates among the trunk tubes 30 in each group 46 to be such that: the trunk tube 30-1 on the bottom portion side 14 = 9×(0%, 50%, or 100%), the trunk tube 30-2 in the middle portion = 2×(0%, 50%, or 100%), and the trunk tube 30-3 on the top portion side 12 = 1×(0%, 50%, or 100%). In this way, compared to the first embodiment, it is possible to flexibly control the volume flow rate of each nozzle 42. Furthermore, the ratio of the volume flow rates of each tube 30 may be controlled to be an arbitrary numerical value.

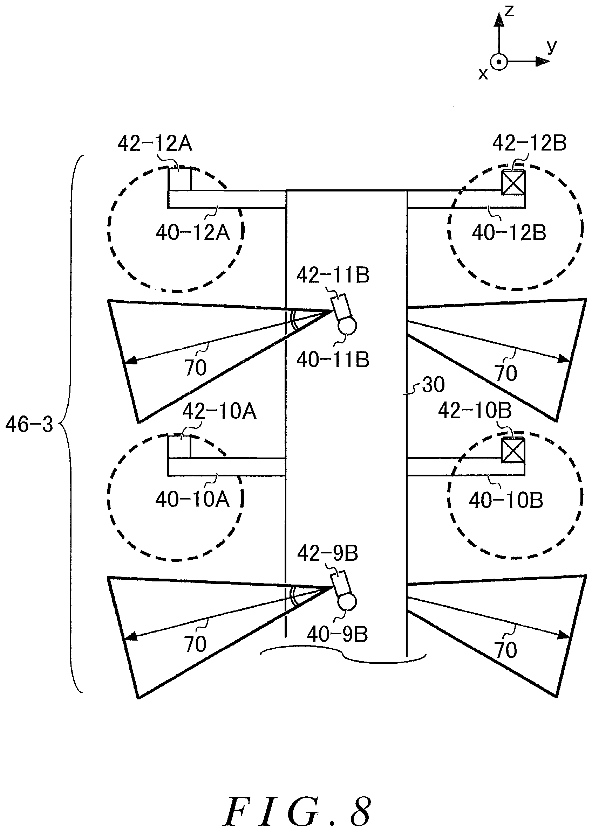

Fig. 8 shows nozzles 42 of the top portion group 46-3 according to a third embodiment. In the present example, a center axis direction 70 of the nozzles 42 of the top portion group 46-3 is inclined to the bottom portion side 14 of the reaction tower 10. The center axis direction 70 in the present example is a straight line that passes through the vertex of the cone formed by the cleaning liquid ejected in the hollow cone shape and is also parallel to the cone in the height direction. In a case where this cone is cleaved by a plane that passes through the vertex of the cone and is perpendicular to the bottom surface, the center axis direction 70 may bisect the angle formed by the two side edges and the vertex. In order to make the drawing easier to view, the center axis directions 70 of the nozzles 42-12 to 42-10 are omitted. However, in Fig. 8, the center axis directions 70 of the nozzles 42-12 to 42-10 are also oriented toward the bottom portion side 14. The center axis directions 70 of the nozzles 42 of the middle portion group 46-2 and the bottom portion group 46-1 in the present example are not inclined to the bottom portion side 14 of the reaction tower 10, and are parallel to the x-y plane.

If a case were assumed in which the nozzles 42 were inclined by just 90 degrees to the bottom portion side 14, the center axis direction 70 would be straight down. The circulation flow of the exhaust gas primarily occurs at positions closer to the inner side surface 16 of the reaction tower 10 than the trunk tube 30, and therefore there is a possibility that it is difficult to realize gas-liquid contact in the circulation flow of the cleaning liquid and the exhaust gas if the center axis direction 70 is oriented straight down. Therefore, the center axis direction 70 in the present example may be inclined at an angle of less than 90 degrees, with the inclination angle being 0 degrees in a case where the nozzles 42 are not inclined toward the bottom portion side 14. The inclination angle of the center axis direction 70 may be determined according to the performances of the exhaust gas processing apparatuses 100 and 110. The inclination angle of the center axis direction 70 may be inclined to the bottom portion side 14 by an amount from several degrees to tens of degrees, and may be inclined by 10 degrees to the bottom portion side 14, for example.

The cleaning liquid particles ejected from the nozzles 42 in the top portion group 46-3 have a smaller particle diameter than the particles ejected from the nozzles 42 of the middle portion group 46-2 and the bottom portion group 46-1, and therefore the particle weight is lower. Therefore, the particles ejected from the nozzles 42 in the top portion group 46-3 join the circulation flow of the exhaust gas and can be emitted to the outside of the reaction tower 10 from the top portion side 12 of the reaction tower 10. The cleaning liquid achieves gas-liquid contact with the exhaust gas including the SO₂ or the like inside the reaction tower 10, and therefore it is preferable that the cleaning liquid is not emitted to the outside of the reaction tower 10.

In the present example, since the center axis direction 70 of the nozzles 42 in the top portion group 46-3 is inclined to the bottom portion side 14, it is possible to reduce the occurrence of the cleaning liquid having relatively small particles being emitted to the outside of the reaction tower 10. It is preferable that all of the nozzles 42 in the top portion group 46-3 be inclined to the bottom portion side 14, but it is acceptable for the three pairs of nozzles 42 (42-12, 42-11, and 42-10) farthest on the top portion side 12 in the top portion group 46-3 to be inclined to the bottom portion side 14. Instead, the two pairs of nozzles 42 (42-12 and 42-11) farthest on the top portion side 12 in the top portion group 46-3 may be inclined to the bottom portion side 14, or the one pair of nozzles 42 (42-12) farthest on the top portion side 12 in the top portion group 46-3 may be inclined to the bottom portion side 14. Furthermore, it is obvious that the present embodiment may be adopted in the first embodiment or the second embodiment.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### List of Reference Numerals

10: reaction tower, 12: top portion side, 14: bottom portion side, 16: inner side surface, 18: drainage pipe, 20: power apparatus, 22: exhaust gas introduction pipe, 24: opening, 30: trunk tube, 32: valve, 40: branch tube, 42: nozzle, 44: opening plane, 46: group, 48: opening, 50: liquid volume flow rate control section, 60: cleaning liquid supply pump, 70: center axis direction, 100: exhaust gas processing apparatus, 110: exhaust gas processing apparatus

## Claims

1. An exhaust gas processing apparatus (100, 110) that processes exhaust gas, comprising:
a reaction tower (10) in which the exhaust gas introduced by an exhaust gas introducing pipe (22) moves upward while being circulated;
a trunk tube (30) that is provided in a height direction inside the reaction tower (10) and is supplied with a liquid for processing the exhaust gas by a cleaning liquid supply pump (60); and
a plurality of ejecting sections that are configured to eject, along with a circulating direction of the exhaust gas, the liquid supplied from the trunk tube (30), wherein
the plurality of ejecting sections are provided at different positions in the height direction of the reaction tower (10) from a bottom portion side (14) where the exhaust gas is introduced to a top portion side (12) where the exhaust gas is emitted, and
a volume flow rate of the liquid ejected from the ejecting sections on the top portion side (12) is less than a volume (or volumetric) flow rate of the liquid ejected from the ejecting sections on the bottom portion side (14), wherein
the volume flow rate of the liquid ejected by the plurality of ejecting sections becomes smaller in order from the bottom portion side (14) to the top portion side (12); and
a particle diameter of the liquid ejected by the ejecting sections becomes small in order from the bottom portion side (14) to the top portion side (12).

2. The exhaust gas processing apparatus (100, 110) according to Claim 1, wherein
area of openings (48) configured to eject the liquid in the ejecting sections on the top portion side (12) is less than area of openings (48) configured to eject the liquid in the ejecting sections on the bottom portion side (14).

3. The exhaust gas processing apparatus (100, 110) according to any one of Claims 1 to 2, wherein
area of openings (48) configured to eject the liquid in the plurality of ejecting sections becomes smaller in order from the bottom portion side (14) to the top portion side (12).

4. The exhaust gas processing apparatus (100, 110) according to any of Claims 1 to 3, wherein
cross-sectional area of the trunk tube (30) on the top portion side (12) is less than cross-sectional area of the trunk tube (30) on the bottom portion side (14).

5. The exhaust gas processing apparatus (100, 110) according to any one of Claims 1 to 4, wherein
the plurality of ejecting sections are divided into a plurality of groups according to the height direction, wherein
the groups include at least:
a bottom portion group on the bottom portion side (14) of the reaction tower (10);
a top portion group on the top portion side (12) of the reaction tower (10); and
a middle portion group between the bottom portion group and the top portion group, wherein
a volume flow rate of the liquid ejected by the plurality of ejecting sections becomes smaller in order from the bottom portion group to the top portion group.

6. The exhaust gas processing apparatus (100, 110) according to Claim 5, wherein
area of the openings (48) configured to eject the liquid in the plurality of ejecting sections becomes smaller in order from the bottom portion group to the top portion group.

7. The exhaust gas processing apparatus (100, 110) according to Claim 5 or 6, wherein
a difference between the area of the openings (48) of the ejecting sections in the bottom portion group and the area of the openings (48) of the ejecting sections in the middle portion group is greater than a difference between the area of the openings (48) of the ejecting sections in the middle portion group and the area of the openings (48) of the ejecting sections in the top portion group.

8. The exhaust gas processing apparatus (100, 110) according to any one of Claims 5 to 7, further comprising:
a control section (50) that is configured to control a volume flow rate of the liquid supplied to the trunk tube (30).

9. The exhaust gas processing apparatus (100, 110) according to Claim 8, wherein,
the control section (50) is configured to control the volume flow rate of the liquid ejected from the ejecting sections in each of the groups.

10. The exhaust gas processing apparatus (100, 110) according to Claim 9, wherein
the exhaust gas processing apparatus (100, 110) processes the exhaust gas emitted by a power apparatus (20), and
the control section (50) is configured to select the group to operate according to a load of the power apparatus (20).

11. The exhaust gas processing apparatus (100, 110) according to Claim 9 or 10, wherein
the control section (50) is configured to cause the ejecting sections of the top portion group to operate constantly when processing the exhaust gas.

12. The exhaust gas processing apparatus (100, 110) according to any one of Claims 5 to 11, wherein
a center axis direction of the ejecting sections of the top portion group is inclined to the bottom portion side (14).

## Patentansprüche

1. Abgasbehandlungsvorrichtung (100, 110), welche Abgas behandelt, umfassend:
einen Reaktionsturm (10), in dem sich das Abgas, das von einem Abgaseinbringungsrohr (22) eingebracht wird, nach oben bewegt, während es zirkuliert wird;
ein Hauptrohr (30), das in einer Höhenrichtung innerhalb des Reaktionsturms (10) bereitgestellt ist und dem eine Flüssigkeit zur Behandlung des Abgases durch eine Reinigungsflüssigkeit-Zufuhrpumpe (60) zugeführt wird; und
eine Vielzahl von Ausstoßsektionen, die ausgelegt sind, um zusammen mit einer Zirkulationsrichtung des Abgases, die Flüssigkeit auszustoßen, die von dem Hauptrohr (30) zugeführt wird;
wobei die Vielzahl von Ausstoßsektionen in verschiedenen Positionen in der Höhenrichtung des Reaktionsturms (10) von einer unteren Abschnittseite (14) bereitgestellt ist, wo das Abgas in eine obere Abschnittseite (12) eingebracht wird, so das Abgas emittiert wird, und
eine Volumen-Durchflussrate der Flüssigkeit, die von den Ausstoßsektionen auf der oberen Abschnittseite (12) ausgestoßen wird, kleiner ist als eine Volumen-(oder volumetrische) Durchflussrate der Flüssigkeit, die aus den Ausstoßsektionen auf der unteren Abschnittseite (14) ausgestoßen wird, wobei
die Volumen-Durchflussrate der Flüssigkeit, die von der Vielzahl von Ausstoßsektionen ausgestoßen wird, kleiner wird in der Reihenfolge von der unteren Abschnittseite (14) zur oberen Abschnittseite (12); und
ein Partikeldurchmesser der Flüssigkeit, die von den Ausstoßsektionen ausgestoßen wird, kleiner wird in der Reihenfolge von der unteren Abschnittseite (14) zur oberen Abschnittseite (12).

2. Abgasbehandlungsvorrichtung (100, 110) nach Anspruch 1, wobei
ein Bereich von Öffnungen (48), die ausgelegt sind, um die Flüssigkeit in den Ausstoßsektionen auf der oberen Abschnittseite (12) auszustoßen, kleiner ist als ein Bereich von Öffnungen (48), die ausgelegt sind, um die Flüssigkeit in den Ausstoßsektionen auf der unteren Abschnittseite (14) auszustoßen.

3. Abgasbehandlungsvorrichtung (100, 110) nach einem der Ansprüche 1 bis 2, wobei
ein Bereich von Öffnungen (48), die ausgelegt sind, um die Flüssigkeit in der Vielzahl von Ausstoßsektionen auszustoßen, kleiner wird in der Reihenfolge von der unteren Abschnittseite (14) zur oberen Abschnittseite (12) .

4. Abgasbehandlungsvorrichtung (100, 110) nach einem der Ansprüche 1 bis 3, wobei
ein Querschnittbereich des Hauptrohrs (30) auf der oberen Abschnittseite (12) kleiner ist als ein Querschnittbereich des Hauptrohrs (30) auf der unteren Abschnittseite (14).

5. Abgasbehandlungsvorrichtung (100, 110) nach einem der Ansprüche 1 bis 4, wobei
die Vielzahl von Ausstoßsektionen in eine Vielzahl von Gruppen gemäß der Höhenrichtung geteilt ist, wobei
die Gruppen mindestens umfassen:
eine untere Abschnittgruppe auf der unteren Abschnittseite (14) des Reaktionsturms (10);
eine obere Abschnittgruppe auf der oberen Abschnittseite (12) des Reaktionsturms (10); und
eine mittlere Abschnittgruppe zwischen der unteren Abschnittgruppe und der oberen Abschnittgruppe;
wobei eine Volumen-Durchflussrate der Flüssigkeit, die von der Vielzahl von Ausstoßsektionen ausgestoßen wird, kleiner wird in der Reihenfolge von der unteren Abschnittgruppe zur oberen Abschnittgruppe.

6. Abgasbehandlungsvorrichtung (100, 110) nach Anspruch 5,
wobei der Bereich der Öffnungen (48), die ausgelegt sind, um die Flüssigkeit in der Vielzahl von Ausstoßsektionen auszustoßen, kleiner wird in der Reihenfolge von der unteren Abschnittgruppe zur oberen Abschnittgruppe.

7. Abgasbehandlungsvorrichtung (100, 110) nach Anspruch 5 oder 6, wobei
eine Differenz zwischen dem Bereich der Öffnungen (48) der Ausstoßsektionen in der unteren Abschnittgruppe und dem Bereich der Öffnungen (48) der Ausstoßsektionen in der mittleren Abschnittgruppe größer ist als eine Differenz zwischen dem Bereich der Öffnungen (48) der Ausstoßsektionen in der mittleren Abschnittgruppe und dem Bereich der Öffnungen (48) der Ausstoßsektionen in der oberen Abschnittgruppe.

8. Abgasbehandlungsvorrichtung (100, 110) nach einem der Ansprüche 5 bis 7, ferner umfassend:
eine Steuersektion (50), die ausgelegt ist, um eine Volumen-Durchflussrate der Flüssigkeit zu steuern, die dem Hauptrohr (30) zugeführt wird.

9. Abgasbehandlungsvorrichtung (100, 110) nach Anspruch 8, wobei
die Steuersektion (50) ausgelegt ist, um die Volumen-Durchflussrate der Flüssigkeit zu steuern, die von den Ausstoßsektionen in jeder der Gruppen ausgestoßen wird.

10. Abgasbehandlungsvorrichtung (100, 110) nach Anspruch 9, wobei
die Abgasbehandlungsvorrichtung (100, 110) das Abgas behandelt, das von einer Leistungsvorrichtung (20) ausgestoßen wird, und
die Steuersektion (50) ausgelegt ist, um die Gruppe auszuwählen, um gemäß einer Last der Leistungsvorrichtung (20) betrieben zu werden.

11. Abgasbehandlungsvorrichtung (100, 110) nach Anspruch 9 oder 10, wobei
die Steuersektion (50) ausgelegt ist, um die Ausstoßsektionen der oberen Abschnittgruppe zu veranlassen, konstant betrieben zu werden, wenn das Abgas behandelt wird.

12. Abgasbehandlungsvorrichtung (100, 110) nach einem der Ansprüche 5 bis 11, wobei
eine zentrale Achsenrichtung der Ausstoßsektion der oberen Abschnittgruppe zur unteren Abschnittseite (14) geneigt ist.

## Revendications

1. Appareil de traitement de gaz d'échappement (100, 110) qui traite du gaz d'échappement, comprenant :
une colonne à réaction (10) dans laquelle le gaz d'échappement introduit par un tuyau d'introduction de gaz d'échappement (22) se déplace vers le haut tout en étant mis en circulation ;
un tube formant tronc (30) fourni dans une direction en hauteur à l'intérieur de la colonne à réaction (10) et alimenté avec un liquide pour traiter le gaz d'échappement grâce à une pompe d'alimentation en liquide de nettoyage (60) ; et
une pluralité de sections d'éjection configurées pour éjecter, avec une direction de circulation du gaz d'échappement, le liquide alimenté à partir du tube formant tronc (30), dans lequel
la pluralité des sections d'éjection sont fournies dans différentes positions dans la direction en hauteur de la colonne à réaction (10) depuis un côté de partie inférieure (14) où le gaz d'échappement est introduit jusqu'à un côté de partie supérieure (12) où le gaz d'échappement est émis, et
un débit volume du liquide éjecté à partir des sections d'éjection sur le côté de partie supérieure (12) est inférieur à un débit volume (ou volumique) du liquide éjecté à partir des sections d'éjection sur le côté de partie inférieure (14), dans lequel
le débit volume du liquide éjecté par la pluralité de sections d'éjection devient plus faible, dans l'ordre, depuis le côté de partie inférieure (14) jusqu'au côté de partie supérieure (12) ; et
un diamètre des particules du liquide éjecté par les sections d'éjection devient petit, dans l'ordre, depuis le côté de partie inférieure (14) jusqu'au côté de partie supérieure (12).

2. Appareil de traitement de gaz d'échappement (100, 110) selon la revendication 1, dans lequel
une surface d'ouvertures (48) configurées pour éjecter le liquide dans les sections d'éjection sur le côté de partie supérieure (12) est inférieure à une surface d'ouvertures (48) configurées pour éjecter le liquide dans les sections d'éjection sur le côté de partie inférieure (14).

3. Appareil de traitement de gaz d'échappement (100, 110) selon l'une quelconque des revendications 1 à 2, dans lequel
une surface d'ouvertures (48) configurées pour éjecter le liquide dans la pluralité des sections d'éjection devient plus petite, dans l'ordre, depuis le côté de partie inférieure (14) jusqu'au côté de partie supérieure (12).

4. Appareil de traitement de gaz d'échappement (100, 110) selon l'une quelconque des revendications 1 à 3, dans lequel
une superficie en section transversale du tube formant tronc (30) sur le côté de partie supérieure (12) est inférieure à une superficie en section transversale du tube formant tronc (30) sur le côté de partie inférieure (14).

5. Appareil de traitement de gaz d'échappement (100, 110) selon l'une quelconque des revendications 1 à 4, dans lequel
la pluralité des sections d'éjection sont divisées en une pluralité de groupes selon la direction en hauteur, dans lequel
les groupes comprennent au moins :
un groupe de partie inférieure sur le côté de partie inférieure (14) de la colonne à réaction (10) ;
un groupe de partie supérieure sur le côté de partie supérieure (12) de la colonne à réaction (10) ; et
un groupe de partie médiane entre le groupe de partie inférieure et le groupe de partie supérieure, dans lequel
un débit volume du liquide de réaction éjecté par la pluralité des sections d'éjection devient plus faible, dans l'ordre, depuis le groupe de partie inférieure jusqu'au groupe de partie supérieure.

6. Appareil de traitement de gaz d'échappement (100, 110) selon la revendication 5, dans lequel
une surface des ouvertures (48) configurées pour éjecter le liquide dans la pluralité des sections d'éjection devient plus petite, dans l'ordre, depuis le groupe de partie inférieure jusqu'au groupe de partie supérieure.

7. Appareil de traitement de gaz d'échappement (100, 110) selon la revendication 5 ou 6, dans lequel
une différence entre la surface des ouvertures (48) des sections d'éjection dans le groupe de partie inférieure et la surface des ouvertures (48) des sections d'éjection dans le groupe de partie médiane est plus grande qu'une différence entre la surface des ouvertures (48) des sections d'éjection dans le groupe de partie médiane et la surface des ouvertures (48) des sections d'éjection dans le groupe de partie supérieure.

8. Appareil de traitement de gaz d'échappement (100, 110) selon l'une quelconque des revendications 5 à 7, comprenant en outre :
une section de contrôle (50) configurée pour contrôler un débit volume du liquide fourni au tube formant tronc (30).

9. Appareil de traitement de gaz d'échappement (100, 110) selon la revendication 8, dans lequel
la section de contrôle (50) est configurée pour contrôler le débit volume du liquide éjecté par les sections d'éjection dans chacun des groupes.

10. Appareil de traitement de gaz d'échappement (100, 110) selon la revendication 9, dans lequel
l'appareil de traitement de gaz d'échappement (100, 110) traite le gaz d'échappement émis par un appareil moteur (20), et
la section de contrôle (50) est configurée pour sélectionner le groupe à faire fonctionner en fonction d'un régime de l'appareil moteur (20).

11. Appareil de traitement de gaz d'échappement (100, 110) selon la revendication 9 ou 10, dans lequel
la section de contrôle (50) est configurée pour faire en sorte que les sections d'éjection du groupe de partie supérieure fonctionnent constamment lors du traitement du gaz d'échappement.

12. Appareil de traitement de gaz d'échappement (100, 110) selon l'une quelconque des revendications 5 à 11, dans lequel
une direction d'axe central des sections d'éjection du groupe de partie supérieure est inclinée par rapport au côté de partie inférieure (14).
